Europäisches Patentamt

European Patent Office

Office européen des brevets

(11) Numéro de publication : **0 154 594**
**B1**

(12)

# FASCICULE DE BREVET EUROPÉEN

(45) Date de publication du fascicule du brevet :
07.06.89

(51) Int. Cl.⁴ : **A 01 K 15/02**

(21) Numéro de dépôt : **85420027.6**

(22) Date de dépôt : **20.02.85**

(54) Dispositif inhibiteur d'aboiements pour les chiens.

(30) Priorité : 24.02.84 FR 8403081

(43) Date de publication de la demande :
11.09.85 Bulletin 85/37

(45) Mention de la délivrance du brevet :
07.06.89 Bulletin 89/23

(84) Etats contractants désignés :
AT BE CH DE FR GB IT LI LU NL SE

(56) Documents cités :
FR—A— 2 222 941
FR—A— 2 523 809
GB—A— 2 071 889
US—A— 3 842 806
US—A— 3 998 209
US—A— 4 180 013

(73) Titulaire : **Vinci, René**
**4 rue Raymond Bistors**
**F-66028 Perpignan (FR)**

(72) Inventeur : **Vinci, René**
**4 rue Raymond Bistors**
**F-66028 Perpignan (FR)**

(74) Mandataire : **Maisonnier, Jean**
**Bureau Maisonnier 28 Rue Servient**
**F-69003 Lyon (FR)**

Jouve, 18, rue St-Denis, 75001 Paris, France

## Description

La présente invention est relative à un dispositif destiné à empêcher les aboiements d'un chien.

On sait que nombre de chiens domestiques vivent à proximité des habitations, voire même en ville, directement dans des appartements. Cette cohabitation avec les humains pose divers problèmes, notamment en ce qui concerne les aboiements des chiens. Lorsqu'un chien se met à aboyer de façon prolongée, de jour ou même de nuit, il en résulte pour le voisinage une nuisance importante, qui donne parfois lieu à de sérieux litiges. On a donc cherché à réaliser un dispositif susceptible de dissuader un chien d'aboyer.

Les dispositifs connus de ce genre utilisent des moyens particulièrement cruels. Pour certains, dès que l'appareil détecte un aboiement, il émet des ultra-sons que le chien perçoit de façon douloureuse (GB-A-2 071 889). D'autres appareils connus consistent à appliquer au chien une décharge électrique, dès que des aboiements sont détectés (FR-A-2 222 941) ou encore à lui faire subir et recevoir des vibrations sur son cou (US-A-4 180 013).

En pratique, on constate que ces appareils sont non seulement cruels, mais inefficaces.

La présente invention a pour but d'éviter ces inconvénients, en réalisant un dispositif qui dissuade efficacement un chien d'aboyer, par des moyens agissant en douceur, voire même d'une façon agréable au chien.

Un dispositif selon l'invention, destiné à être incorporé à un collier que porte le chien, comprend un capteur de sons capable de détecter les aboiements du chien pour émettre alors un signal électrique qui actionne des moyens aptes à provoquer l'arrêt des aboiements, et il est caractérisé en ce que ces moyens, lorsqu'ils sont actionnés par le signal électrique, émettent dans l'atmosphère au voisinage de la tête du chien, une substance provoquant l'arrêt des aboiements.

Suivant une autre caractéristique de l'invention, la substance est contenue dans un réservoir sous pression incorporé au collier, et pourvu d'une valve de pulvérisation, sur laquelle des moyens agissent en cas d'aboiements.

Suivant une autre caractéristique de l'invention, les moyens pour agir sur la valve du réservoir sont constitués par une came entraînée en rotation par un moteur électrique, l'ensemble étant incorporé au collier du chien.

Suivant une autre caractéristique de l'invention, la substance se présente sous la forme d'un aérosol constamment sous pression à l'intérieur du réservoir, si bien que le seul fait, pour la came, d'enfoncer le poussoir de la vanne, provoque l'émission et la pulvérisation sous pression du produit.

Suivant une autre caractéristique de l'invention, le produit est contenu sans pression dans le réservoir en dehors des périodes d'aboiements, l'ensemble étant réalisé à la façon connue d'une pompe de vaporisateur, qui met le produit sous pression uniquement en cas d'aboiements, lorsque la came enfonce le poussoir de la vanne pour pulvériser le produit.

Suivant une autre caractéristique de l'invention, l'ensemble du dispositif comprend un circuit électronique et une pile électrique d'alimentation.

Suivant une autre caractéristique de l'invention, le circuit électronique comprend les éléments suivants :

— un microphone, recevant les bruits extérieurs, et notamment les aboiements du chien ;

— un filtre, réglé pour ne laisser passer que les fréquences correspondant aux aboiements ;

— un amplificateur ;

— un relais ;

— un moteur électrique, susceptible d'entraîner en rotation la came qui agit sur la valve du réservoir ;

— un étage de remise à zéro, bouclé entre la valve et l'amplificateur, pour provoquer l'arrêt du moteur dès que la valve est revenue en position fermée de repos.

Suivant une autre caractéristique de l'invention, le microphone est branché sur l'entrée de l'amplificateur, en parallèle avec un récepteur radio, susceptible d'être actionné à distance par un émetteur radio, par ailleurs, un commutateur de sélection est prévu à l'entrée de l'amplificateur, pour relier celui-ci à volonté, soit au microphone actionné par les aboiements, soit au récepteur radio, dans ce dernier cas, le dispositif selon l'invention peut être utilisé par un dresseur, pour commander à distance le dressage du chien. Bien entendu, on ne quitterait pas le cadre de l'invention, en intercalant entre le circuit électronique et le réservoir, divers systèmes connus autres qu'une came, pour actionner à volonté la vanne de pulvérisation.

Le dessin annexé, donné à titre d'exemple non limitatif, permettra de mieux comprendre les caractéristiques de l'invention.

Figure 1 est un schéma bloc, illustrant le câblage électronique d'un dispositif selon l'invention.

Figure 2 montre une réalisation pratique sous la forme d'un coffret miniaturisé.

Figure 3 montre le contenu de ce coffret.

Figures 4 et 5 illustrent le fonctionnement de la partie mécanique du dispositif, à savoir la commande de pulvérisation sur la vanne du réservoir.

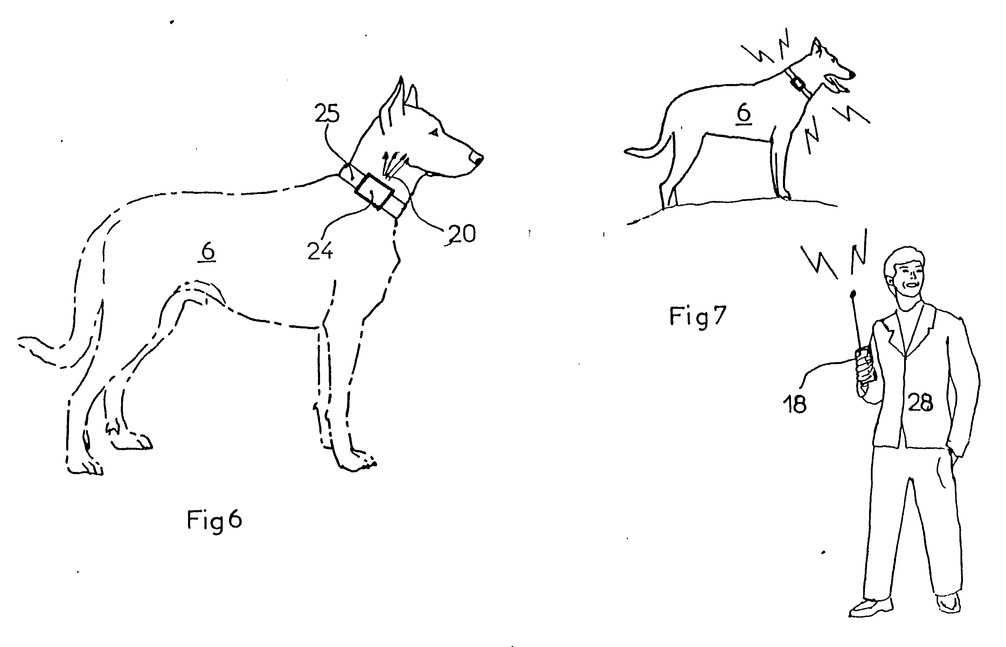

Figure 6 montre l'appareil porté par un chien pour empêcher ses aboiements.

Figure 7 montre l'utilisation de l'appareil, pour le dressage à distance d'un chien.

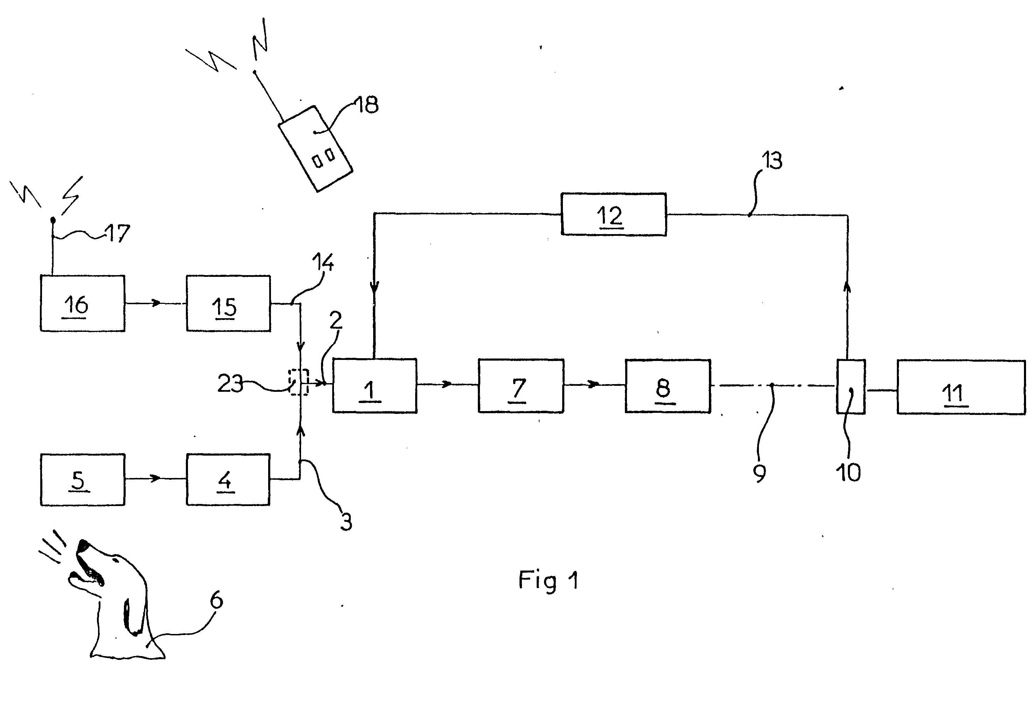

Le schéma électronique illustré sur la figure 1 comprend un amplificateur 1 dont l'entrée 2 est reliée par une ligne 3, à un filtre 4, recevant lui-même les signaux émis par un microphone 5. Le microphone 5 perçoit les bruits environnants, et le filtre 4 est réglé de manière à ne laisser passer que les signaux correspondant à des fréquences caractéristiques des aboiements d'un chien 6.

L'amplificateur 1 actionne, par un relais 7, un moteur électrique 8, qui, par des moyens 9, agit sur la vanne de pulvérisation 10 d'un réservoir 11. Ce dernier contient une substance que la vanne 10 permet de libérer dans l'atmosphère, à proximité des organes sensoriels du chien 6 (notamment à proximité de son nez ou de ses yeux).

Un dispositif de remise à zéro 12 est intercalé sur une ligne 13, bouclé entre la vanne de pulvérisation 10, et l'amplificateur 1.

Sur la ligne d'entrée 2 de l'amplificateur 1, en parallèle avec la ligne 3 du microphone 5, on peut prévoir une autre ligne 14, qui, par un filtre et transducteur 15, reçoit les signaux d'un récepteur radio 16, auquel est incorporée une antenne réceptrice 17. Cette antenne reçoit à distance les signaux radio produits par un émetteur 18.

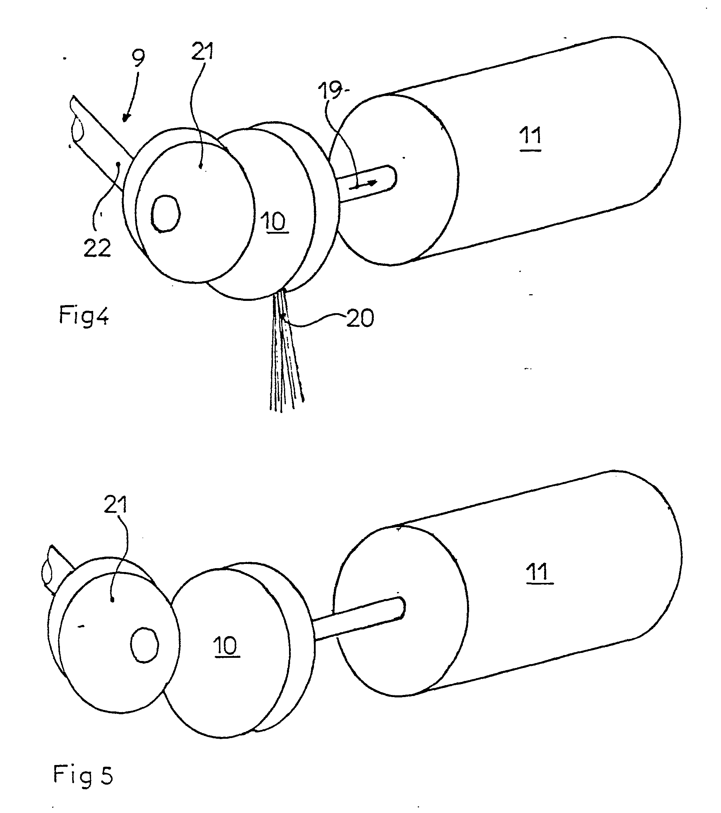

Le réservoir 11 peut être constitué par une bombe aérosol, c'est-à-dire contenant en permanence sous pression, la substance à projeter. Il peut être également constitué par un réservoir sans pression, analogue à celui d'un vaporisateur dont la pompe de pulvérisation serait constituée par la vanne 10. Dans tous les cas, il suffit d'enfoncer la tête de la vanne 10 dans le sens indiqué sur la figure 4, par la flèche 19, pour provoquer la pulvérisation d'un jet 20 de la substance considérée.

Dans l'exemple illustré sur les figures 4 et 5, les moyens 9 reliant le moteur 8 à la tête de vanne 10, sont constitués par une came excentrique 21, dont la rotation est commandée par le moteur 8, à partir d'un arbre tournant 22. Quand le bossage de la came 21 enfonce la vanne 10 (figure 4), cela déclenche l'émission d'un jet 20 du produit contenu dans le réservoir 11. Par contre, quand l'appareil revient à la position de zéro illustré sur la figure 5, c'est le dos de la came 21 qui fait face à la vanne 10, laquelle est en position de repos et d'obturation.

Enfin, au point de raccordement entre les deux lignes 3, 14, et l'entrée 2 de l'amplificateur 1, on peut éventuellement intercaler un commutateur de sélection 3, permettant à l'appareil de fonctionner :

soit en réponse au microphone 5 ;
soit en réponse au récepteur radio 16.

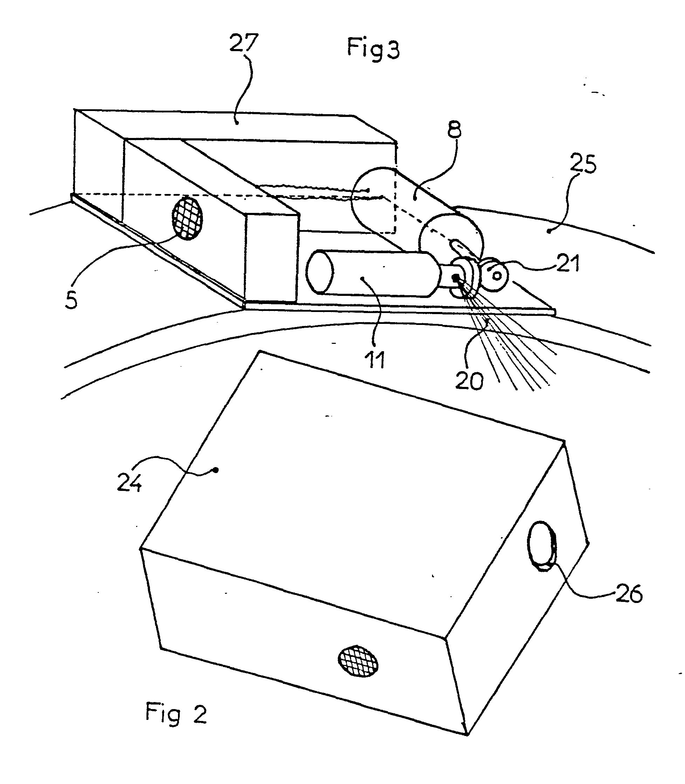

L'ensemble du dispositif est monté à l'intérieur d'un coffret miniaturisé 24 (figure 2) et peut être fixé sur le collier 25 d'un chien 6. Un orifice ou buse 26 est prévu en face de l'emplacement du jet de pulvérisation 20.

Enfin, le coffret 24 contient une pile 27, pour l'alimentation en électricité de l'ensemble.

Le fonctionnement est le suivant :

Lorsque le chien 6 porte le collier 25, équipé du coffret 24, chaque déclenchement du moteur 11 provoque la pulvérisation d'un jet de produit 20, en direction des organes sensoriels du chien (nez, yeux).

Si l'appareil est branché pour répondre aux impulsions provenant du microphone 5, deux utilisations sont possibles, à savoir :

si le microphone 5 et son filtre 4 sont réglés de façon à répondre aux aboiements du chien 6 (cas de la figure 1), un jet de produit 20 sera pulvérisé vers la tête du chien, à chaque tentative d'aboiement. Le chien cesse donc d'aboyer ;

si par contre, le microphone 5 et son filtre 4 sont réglés pour répondre à certaines intonations de la voix d'un dresseur placé à distance, le chien 6 recevra un jet de produit 20 chaque fois qu'à distance, la voix du dresseur en fera la demande. L'appareil peut ainsi être utilisé pour faciliter le dressage du chien 6.

Suivant une autre possibilité d'utilisation, lorsque le commutateur 23 est dans la position qui relie l'amplificateur 1 au récepteur radio 16, l'appareil peut être utilisé pour dresser le chien 6. Dans ce cas, l'appareil émetteur 18 est porté par le dresseur 28 du chien 6. Ainsi, lorsqu'au cours du dressage, le dresseur 28 donne des ordres au chien 6, il peut, à bon escient, ponctuer de pulvérisations 20 le comportement en réponse du chien 6.

Bien entendu, on ne quitterait pas le cadre de l'invention en remplaçant le système à came tournante 21, par tout autre dispositif équivalent afin de réaliser les moyens 9 pour actionner la vanne de pulvérisation 10. Ces moyens 9 pourraient notamment être constitués par un électroaimant, ou par un ressort que le moteur 11 maintiendrait bandé afin de stocker l'énergie nécessaire pour enfoncer sur commande la tête de vanne 10.

**Revendications**

1. Dispositif destiné à être incorporé à un collier (25) que porte un chien (6), comprenant un capteur de sons, capable de détecter les aboiements du chien, pour émettre alors un signal électrique qui actionne des moyens aptes à provoquer l'arrêt des aboiements, caractérisé en ce que ces moyens, lorsqu'ils sont actionnés par le signal électrique, émettent dans l'atmosphère, au voisinage de la tête du chien (6), une substance (20) provoquant l'arrêt des aboiements.

2. Dispositif suivant la revendication 1, caractérisé en ce que la substance est contenue dans un réservoir (11) sous pression incorporé au collier (25) et pourvu d'une valve de pulvérisation (10) sur laquelle des moyens (9) agissent en cas d'aboiements.

3. Dispositif suivant la revendication 2, caractérisé en ce que les moyens (9) pour agir sur la valve (10) du réservoir (11) sont constitués par une came (21) entraînée en rotation par un moteur électrique (8), l'ensemble étant incorporé au collier (25) du chien (6).

4. Dispositif suivant la revendication 3, caractérisé en ce que la substance se présente sous la forme d'un aérosol constamment sous pression à l'intérieur du réservoir (11) si bien que le seul fait, pour la came (21), d'enfoncer le poussoir de la vanne (10) provoque l'émission et la pulvérisation sous pression du produit (20).

5. Dispositif suivant la revendication 3, caractérisé en ce que le produit est contenu sans pression dans le réservoir (11) en dehors des périodes d'aboiements, l'ensemble étant réalisé à la façon connue d'une pompe de vaporisateur, qui met le produit sous pression uniquement en cas d'aboiements, lorsque la came (21) enfonce le poussoir de la vanne (10), pour pulvériser le produit (20).

6. Dispositif suivant l'une quelconque des revendications précédentes, caractérisé en ce que l'ensemble du dispositif comprend un circuit électronique (5) à (13) et une pile électrique d'alimentation (27).

7. Dispositif suivant l'une quelconque des revendications précédentes, caractérisé en ce que le circuit électronique comprend les éléments suivants :

un microphone (5) recevant les bruits extérieurs, et notamment les aboiements du chien (6) ;

un filtre (4), réglé pour ne laisser passer que les fréquences correspondant aux aboiements ;

un amplificateur (1) ;

un relais (7) ;

un moteur électrique (8) susceptible d'entraîner en rotation la came (21) qui agit sur la valve (10) du réservoir (11) ;

un étage de remise à zéro (12), bouclé entre la valve (10) et l'amplificateur (1), pour provoquer l'arrêt du moteur (8) dès que la valve (10) est revenue en position fermée de repos.

8. Dispositif suivant la revendication 7, caractérisé en ce que le microphone (5) est branché sur l'entrée (2) de l'amplificateur (1), en parallèle avec un récepteur radio (16) susceptible d'être actionné à distance par un émetteur radio (18).

9. Dispositif suivant la revendication 8, caractérisé en ce qu'un commutateur de sélection (23) est prévu à l'entrée (2) de l'amplificateur (1), pour relier celui-ci à volonté, soit au microphone (5) actionné par les aboiements, soit au récepteur radio (16), si bien que, dans ce dernier cas, le dispositif peut être utilisé par un dresseur (28), pour commander à distance le dressage du chien (6).

## Claims

1. Device intended to be incorporated in a collar (25) worn by a dog (6), comprising a sound sensor capable of detecting the barking of the dog and then transmitting an electric signal which operates means adapted to end the barking, characterized in that when these means are actuated by the electric signal they emit into the atmosphere near the head of the dog (6) a substance (20) which has the effect of stopping the barking.

2. Device according to Claim 1, characterized in that the substance is contained in a pressurized reservoir (11) incorporated in the collar (25) and provided with an atomizer valve (10) acted on by means (9) when barking occurs.

3. Device according to Claim 2, characterized in that the means (9) acting on the valve (10) of the reservoir (11) consist of a cam (21) driven rotationally, by an electric motor (8), the whole arrangement being incorporated in the collar (25) of the dog (6).

4. Device according to Claim 3, characterized in that the substance is in the form of an aerosol. constantly under pressure inside the reservoir (11), so that the sole action of the cam (21) in depressing the pusher of the valve (10) gives rise to the emission and the atomization under pressure of the product (20).

5. Device according to Claim 3, characterized in that the product is contained in the reservoir (11) without being under pressure outside the periods when the dog is barking, the whole arrangement being constructed after the style of a known atomizer pump, which pressurizes the product only in the event of barking occurring, when the cam (21) depresses the pusher of the valve (10) in order to atomize the product (20).

6. Device according to any one of the preceding claims, characterized in that the unit contains an electronic circuit (5 to 13) and an electric supply battery (27).

7. Device according to any one of the preceding claims, characterized in that the electronic circuit comprises the following elements :

a microphone (5) receiving external noises, particularly the barking of the dog (6) ;

a filter (4) adjusted to allow only the passage of frequencies corresponding to barking ;

an amplifier (1) ;

a relay (7) ;

an electric motor (8) adapted to drive rotationally the cam (21) which acts on the valve (10) of the reservoir (11) ;

a resetting stage (12) looped between the valve (10) and the amplifier (1) for the purpose of stopping the motor (8) as soon as the valve (10) has returned to the closed position of rest.

8. Device according to Claim 7, characterized in that the microphone (5) is connected to the input (2) of the amplifier (1) in parallel with a radio receiver (16) adapted to be operated by remote control from a radio transmitter (18).

9. Device according to Claim 8, characterized in that a selector switch (23) is provided at the input (2) of the amplifier (1) in order to connect the latter at will either to the microphone (5) operated by the barking or to the radio receiver (16), so that in the latter case the device can be used by a trainer (28) for the remote control of the training of the dog (6).

## Patentansprüche

1. Vorrichtung, die in ein Halsband (25), das ein Hund (6) trägt, einsetzbar ist, bestehend aus einem Tonempfänger, der fähig ist, das Gebell des Hundes aufzuspüren, um ein elektrisches Signal zu senden, das Mittel betätigt, die geeignet sind, das Aufhören des Bellens herbeizuführen, dadurch gekennzeichnet, daß die Mittel, wenn sie durch das elektrische Signal in Gang gesetzt sind, eine Substanz (20) in der Nähe des Kopfes des Hundes (6) in die Atmosphäre ausbringen, um das Aufhören des Bellens zu bewirken.

2. Vorrichtung nach Anspruch 1, dadurch gekennzeichnet, daß die Substanz sich unter Druck in einem Behälter (11) befindet, der im Halsband (25) eingesetzt ist, und der ein Zerstäuberventil (10) aufweist, auf das die Mittel (9) im Fall des Bellens einwirken.

3. Vorrichtung nach Anspruch 2, dadurch gekennzeichnet, daß die Mittel (9), die auf das Ventil (10) des Behälters (11) einwirken aus einer Nockenscheibe (21) bestehen, die durch einen Elektromotor (8) angetrieben ist, wobei die Anordnung im Halsband (25) des Hundes (6) eingesetzt ist.

4. Vorrichtung nach Anspruch 3, dadurch gekennzeichnet, daß die Substanz als Aerosol ausgebildet ist, das im Inneren des Behälters (11) unter ständigem Druck steht, so daß, wenn die Nockenscheibe (21) eine Kraft auf den Stößel des Ventils (10) ausübt, ein Ausbringen und Pulverisieren des Produktes (20) unter Druck erfolgt.

5. Vorrichtung nach Anspruch 3, dadurch gekennzeichnet, daß das Produkt außerhalb der Bellzeiten kontinuierlich ohne Druck im Behälter (11) enthalten ist und die Anordnung nach Art einer bekannten Zerstäuberpumpe wirkt, die das Produkt nur im Falle des Bellens unter Druck setzt, wenn die Nockenscheibe (21) auf den Stößel des Ventils (10) drückt, um das Produkt zu zerstäuben.

6. Vorrichtung nach einem der vorhergehenden Ansprüche, dadurch gekennzeichnet, daß die Anlage einen elektrischen Stromkreis (5 bis 13) und eine elektrische Batterie (27) enthält.

7. Vorrichtung nach einem der vorhergehenden Ansprüche, dadurch gekennzeichnet, daß der elektrische Stromkreis folgende Elemente enthält:

ein Mikrophon (5), das äußere Geräusche, insbesondere das Bellen des Hundes, empfängt,

einen Filter (4), der regelt, daß die Frequenz des Hundegebells nicht durchfällt,

einen Verstärker (1),

ein Relais (7),

einen Elektromotor (6), der die Nockenscheibe (21), die auf das Ventil (10) des Behälters (11) einwirkt, antreibt, eine Wartenullstufe (12), die zwischen dem Ventil (10) und dem Verstärker (1) angeordnet ist, um das Anhalten des Motors (8) hervorzurufen, wenn das Ventil (10) wieder in geschlossene Ruhestellung zurückgekommen ist.

8. Vorrichtung nach Anspruch 7, dadurch gekennzeichnet, daß das Mikrophon (5) am Eingang (2) des Verstärkers (1) abgezweigt ist und parallel mit einem Radioempfänger (16), der aus Entfernung zu einem Radiosender (18) betätigbar ist, geschaltet ist.

9. Vorrichtung nach Anspruch (8), dadurch gekennzeichnet, daß ein Wahlschalter (23) am Eingang (2) des Verstärkers (1) angeordnet ist, um wahlweise das Mikrophon (5), das durch das Bellen des Hundes in Tätigkeit gesetzt wird, oder den Radioempfänger (16) einzuschalten, so daß im letzteren Fall die Vorrichtung durch einen Dresseur (28) benutzt werden kann, um auf Entfernung die Dressur des Hundes (6) zu kommandieren.

Fig 1

Fig 3

Fig 2

Fig4

Fig 5

Fig 7

Fig 6